# EUROPÄISCHE PATENTSCHRIFT

(11) **EP 2 932 643 B1**
(45) Veröffentlichungstag und Bekanntmachung des Hinweises auf die Patenterteilung: **08.11.2023**
(21) Anmeldenummer: 13802298.3
(22) Anmeldetag: 27.11.2013
(51) Int. Cl.: H04L 7/00, G08C 17/04, G01D 3/08, H01F 19/08

(54) **VORRICHTUNG ZUR SYNCHRONISIERUNG VON TAKTFREQUENZEN**
DEVICE FOR SYNCHRONIZING CLOCK FREQUENCIES
DISPOSITIF DE SYNCHRONISATION DES FREQUENCES D'HORLOGE

(30) Priorität: 13.12.2012 DE 102012112234
(43) Veröffentlichungstag der Anmeldung: 21.10.2015
(73) Patentinhaber: Endress+Hauser SE+Co. KG, 79689 Maulburg (DE)
(72) Erfinder: ROMBACH, Walter, 79618 Rheinfelden (DE); FERRARO, Franco, 79739 Schwörstadt (DE); WERNET, Armin, 79618 Rheinfelden (DE); UPPENKAMP, Kaj, 79664 Wehr (DE)
(74) Vertreter: Koslowski, Christine Adelheid
(86) Internationale Anmeldenummer: PCT/EP2013/074891
(87) Internationale Veröffentlichungsnummer: WO 2014/090577

(56) Entgegenhaltungen:
- EP-A1- 0 892 249
- EP-A2- 0 348 758
- WO-A1-91/13417
- DE-A1-102006 051 900
- US-A1- 2009 212 759

## Beschreibung

Die Erfindung betrifft eine Vorrichtung zur Synchronisierung von Taktfrequenzen einer ersten auf der Primärseite angeordneten Elektronikeinheit und einer zweiten auf der Sekundärseite angeordneten Elektronikeinheit.

Aus dem Stand der Technik sind Messgeräte für die Automatisierungstechnik bekannt geworden, welche mit zwei Elektronikeinheiten ausgestattet sind, die in vielen Fällen galvanisch voneinander getrennt sind. Die primärseitige Elektronikeinheit ist üblicherweise mit der Energieversorgung des Messgerätes verbunden, während die sekundärseitige Elektronikeinheit dem Sensor bzw. dem Aktor zugeordnet ist. Zur Energie- und Datenübertragung sind üblicherweise eine oder mehrere galvanisch getrennte Schnittstellen vorgesehen, welche induktiv, kapazitiv oder optisch ausgestaltet sein können. Die Kommunikation zwischen den beiden Elektronikeinheiten erfolgt beispielsweise bei induktiver Kopplung von der Primärseite zur Sekundärseite über Frequenzmodulation und in umgekehrter Richtung über Lastmodulation, wie in der DE 10 2006 051 900 A1 beschrieben. Auch eine Amplitudenmodulation ist bekannt. Oftmals erfolgt keine oder nur eine unidirektionale Kommunikation von der Primärseite zur Sekundärseite über die galvanisch getrennte Schnittstelle; ein Optokoppler dient der Datenüber-tragung von der Sekundärseite zur Primärseite.

In der Regel werden von der Sekundärseite an die Primärseite Messdaten übertragen, welche die Prozessgröße repräsentieren, während von der Primärseite an die Sekundärseite vor allem Parametrierdaten oder sensorspezifische Kenndaten übermittelt werden. Aus Platz-, Energie- und Kostengründen wird die Anzahl an Schnittstellen zwischen Primärseite und Sekundärseite in der Regel auf ein Minimum reduziert. Als Folge hiervon ist die Übermittlung der Datenmenge und damit von Information nur begrenzt möglich.

Üblicherweise enthalten zwei elektrisch voneinander getrennte Elektronikeinheiten jeweils einen eigenen Taktgeber. Aus Kostengründen handelt es sich bei den Taktgebern in vielen fällen nicht um Quarzoszillatoren, sondern um kostengünstigen elektronische Schaltungen. Insbesondere für den Bereich der Automatisierungstechnik ergeben sich daraus mehrere Nachteile:
- erhöhte Kosten aufgrund der Verwendung von zwei Oszillatoren auf der Primär- und Sekundärseite;
- zusätzlicher Platzbedarf aufgrund der Verwendung von zwei Oszillatoren;
- Drift - unter ungünstigen Gegebenheiten sogar in unterschiedliche Richtungen - der durch die getrennt angeordneten Oszillatoren erzeugten Takte: In vielen Fällen sind die Oszillatoren auf der Primärseite und der Sekundärseite unterschiedlichen Umgebungstemperaturen ausgesetzt. Darüber hinaus werden an die galvanisch getrennten Oszillatoren auf der Primärseite und der Sekundärseite unterschiedliche Anforderungen an die Genauigkeit der Takterzeugung gestellt. Im ungünstigsten Fall kann daher eine asynchrone Kommunikation über z.B. eine UART Schnittstelle aufgrund der zuvor genannten Nachteile in der Automatisierungstechnik völlig unbrauchbar werden.

In den Druckschriften WO 91/01210 und EP 0892 249 A1 wird jeweils ein Prozesstransmitter beschrieben, bei dem auch die Elektronikeinheit der Sekundärseite über die Elektronikeinheit der Primärseite getaktet wird.

Ein Prozesstransmitter, bei dem zusätzlich zur Taktung der Sekundärseite auch dessen Energieversorgung über die Primärseite erfolgt, wird in der Patentanmeldung US 2009/0212759 A1 gezeigt.

In der Veröffentlichungsschrift EP 0384 758 A2 ist ein Prozesstransmitter offenbart, bei dem zusätzlich zur Energieversorgung der Sekundärseite auch ein Datenaustausch über eine galvanisch getrennte Schnittstelle erfolgt.

Die Aufgabe der Erfindung besteht darin, eine Vorrichtung zur Bestimmung mindestens einer Prozessgröße bereitzustellen, bei welcher der Datenaustausch zwischen Primärseite und Sekundärseite verbessert ist.

Die Aufgabe wird durch eine Vorrichtung nach Anspruch 1 gelöst, wobei der ersten Elektronikeinheit ein Taktgeber zugeordnet ist, der einen Takt mit einer Referenz-Taktfrequenz erzeugt. Zwischen der ersten Elektronikeinheit und der zweiten Elektronikeinheit ist eine Übertragungseinheit vorgesehen. Weiterhin sind eine erste Steuerung und eine zweite Steuerung vorgesehen, wobei die erste Steuerung die Übertragungseinheit mit einer Taktfrequenz ansteuert, die einen Bruchteil der Referenz-Taktfrequenz der ersten Elektronikeinheit beträgt, und wobei die zweite Steuerung die Taktfrequenz auf der Sekundärseite auskoppelt und anhand der ausgekoppelten Taktfrequenz eine Taktfrequenz für die zweite Elektronikeinheit erzeugt, die synchron zur Referenz-Taktfrequenz der ersten Elektronikeinheit ist. Durch die Synchronisierung der Taktfrequenzen auf der Primärseite und auf der Sekundärseite ist der Datenaustausch über eine asynchrone Kommunikationsschnittstelle jederzeit und/oder unabhängig von den herrschenden Umgebungsbedingungen möglich.

Durch die Synchronisierung der Takte der Elektronikeinheiten werden die zuvor genannten Nachteile beseitigt. Die Synchronisierung erfolgt über den Takt der zur galvanischen Trennung eingesetzten Übertragungseinheit. Die Übertragungseinheit wird von der auf der Primärseite angeordneten Elektronikeinheit getaktet. Aus dem Wandlertakt wird ein synchroner Takt für die Elektronikeinheit auf der Sekundärseite erzeugt.

Bevorzugt wird die vorliegende Erfindung bei einer Vorrichtung zur Bestimmung und/oder Überwachung mindestens einer Prozessgröße eingesetzt. Entsprechende Vorrichtungen für die Automatisierungstechnik werden von der Anmelderin in vielfältigen Ausgestaltungen angeboten und vertrieben. Insbesondere in dem Fall, dass die Vorrichtungen in einer explosionsgefährdeten Umgebung eingesetzt werden, werden die Primärseite und die Sekundärseite galvanisch voneinander getrennt. Auf der Sekundärseite ist ein für die zu messende oder überwachende Prozessgröße sensitives Sensorelement angeordnet; auf der Sekundärseite befindet sich die sekundärseitige Elektronikeinheit, die ein die Prozessgröße repräsentierendes Messsignal bereitstellt. Oftmals ist auf der Primärseite die primärseitige Elektronikeinheit zur Auswertung des Messsignals und zur Erzeugung eines Ausgangssignals zu finden. Die beiden Elektronikeinheiten sind, wie bereits erwähnt, galvanisch voneinander getrennt. Bei der Prozessgröße handelt es sich beispielsweise um den Füllstand einer Flüssigkeit oder eines Schüttguts in einem Behälter, die Dichte, die Viskosität, die elektrische Leitfähigkeit, den Durchfluss oder den pH-Wert eines wie auch immer gearteten Mediums.

Gemaß der erfindungsgemalßen vorrichtung ist die Übertragungseinheit so ausgestaltet, dass sie Energie von der ersten Elektronikeinheit zur zweiten Elektronikeinheit unidirektional und Daten zwischen den beiden Elektronikeinheiten unidirektional oder bidirektional überträgt.

Darüber hinaus wird vorgeschlagen, dass es sich bei dem Datenaustausch zwischen der ersten Elektronikeinheit und der zweiten Elektronikeinheit um eine asynchrone Kommunikation handelt.

Erfindungsgemäss handelt es sich bei der Übertragungseinheit um eine galvanische Trennung, insbesondere um einen DC/DC Wandler handelt.

Die erfindungsgemäße Vorrichtung schlägt vor, dass der zweiten Elektronikeinheit eine Synchronisiereinheit zugeordnet ist, die anhand der ausgekoppelten Taktfrequenz eine Taktfrequenz für die zweite Elektronikeinheit erzeugt, die ein Vielfaches der Taktfrequenz der ersten Elektronikeinheit beträgt. Bevorzugt handelt es sich bei der Synchronisierungseinheit um einen Frequency Locked Loop bzw. einen FLL.

Die Option, per Synchronisiereinheit, insbesondere per FFL, eine höhere synchrone Taktfrequenz zu erzeugen, z.B. 50 kHz zu 5 MHz, hat den Vorteil, auf der Sekundärseite den externen Taktgeber, der eine relativ hohe Genauigkeit aufweisen muss, zu eliminieren. Darüber hinaus kann auf der Primärseite ein kostengünstiger Taktgeber eingesetzt werden.

Weiterhin wird im Zusammenhang mit der Erfindung vorgeschlagen, dass es sich bei der ersten Elektronikeinheit um einen Mikroprozessor oder einen Microcontroller handelt, der einem Messumformer oder einer Steuerung zugeordnet ist, und dass es sich bei der zweiten Elektronikeinheit um einen Mikroprozessor oder einen Microcontroller handelt, der einem von dem Messumformer entfernt angeordneten Sensor oder Aktor zugeordnet ist. Eine vorteilhafte Weiterbildung der Erfindung sieht vor, dass es sich bei dem Sensor um einen Sensor handelt, über den der Füllstand eines Mediums in einem Behälter, und/oder die Dichte des Mediums und/oder die Viskosität des Mediums, und/oder die Temperatur des Mediums ermittelt wird. Besonders günstig ist es, wenn es sich bei dem Sensor um einen vibronischen Sensor handelt, bei denen üblicherweise die Frequenz eines schwingfähigen Elements ausgewertet wird. Vibronische Sensoren zur Füllstands-, Dichte- und/oder Viskositätsmessung werden von der Anmelderin unter der Bezeichnung LIQUIPHANT und SOLIPHANT in unterschiedlichen Ausgestaltungen angeboten und vertrieben. Selbstverständlich kann es sich auch um eine kapazitive Sonde handeln. Wie jedoch bereits in der Einleitung erwähnt, ist die Erfindung auf keine speziellen Messgeräte oder Messgerätetypen beschränkt, sondern sie kann generell bei miteinander gekoppelten Microprozessoren oder Microcontrollern eingesetzt werden, die galvanisch voneinander getrennt sind. Desweiteren ist die Erfindung auch bei Geräten (Aktoren) einsetzbar, über die eine Stellgröße gesteuert oder geregelt wird.

Die Erfindung wird anhand der nachfolgenden Figuren näher erläutert:
Fig. 1: ein Blockschaltbild einer ersten Ausgestaltung der erfindungsgemäßen Vorrichtung und
Fig. 2: das Blockschaltbild aus Fig. 1 mit zusätzlichen Details.

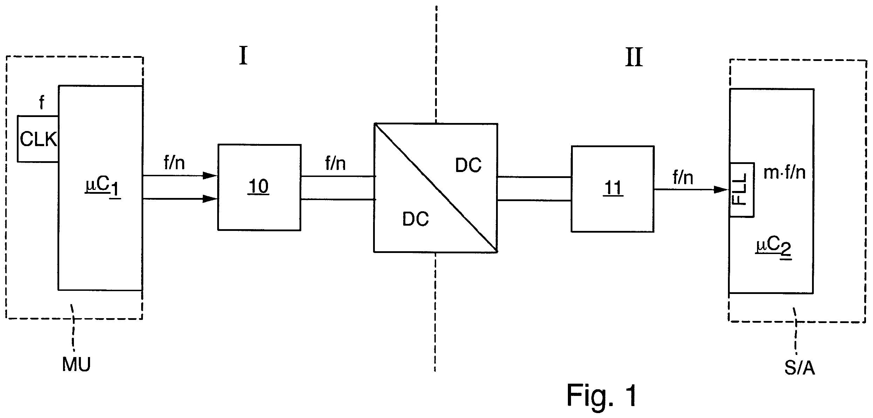

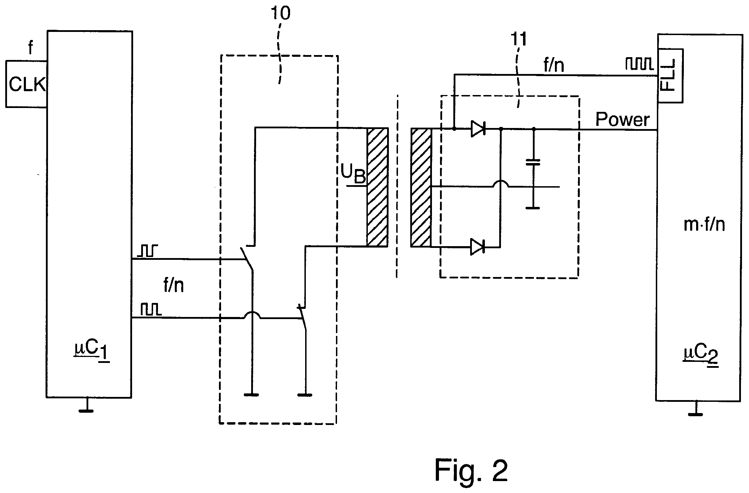

Fig. 1 zeigt ein Blockschaltbild einer ersten Ausgestaltung der erfindungsgemäßen Vorrichtung zur Synchronisierung der Taktfrequenzen einer ersten auf der Primärseite I angeordneten Elektronikeinheit µC1 und einer zweiten auf der Sekundärseite II angeordneten Elektronikeinheit µC2. In Fig. 2 sind weitere Details der Schaltung zu sehen.

Im Falle eines eine Prozessgröße bestimmenden und/oder überwachenden Messgeräts ist die primärseitige Elektronikeinheit µC1, bei der er sich bevorzugt um einen Microprozessor oder einen Microcontroller handelt, im Messumformer angeordnet, während die sekundärseitige Elektronikeinheit µC2, bei der es sich gleichfalls bevorzugt um einen Microprozessor oder einen Microcontroller handelt, im Sensor S oder im Aktor A angeordnet ist. Der Datenaustausch zwischen den beiden Elektronikeinheiten µC1, µC2 erfolgt über eine asynchrone und damit stark von der Zeit abhängige Kommunikation. Der ersten Elektronikeinheit µC1 ist ein interner oder alternativ ein externer Taktgeber CLK zugeordnet. Dieser Taktgeber CLK muss aufgrund der Synchronisierung der Taktfrequenzen der Elektronikeinheiten µC1, µC2 keine hohe Güte aufweisen, d.h. konkret, dass weder die Toleranz der erzeugten Taktfrequenz f besonders gering sein muss, noch dass die Stabilität der Taktfrequenz über den zulässigen Temperaturbereich besonders hoch sein muss. Im Zusammenhang mit der Erfindung kann also ein kostengünstiger Taktgeber CLK eingesetzt werden. Beispielsweise erzeugt der Taktgeber CLK eine Taktfrequenz f von 1 MHz. In der primärseitigen Elektronikeinheit µC1 wird die Taktfrequenz f um einen Faktor n heruntergeteilt, so dass ein Takt mit einer Referenzfrequenz f/n erzeugt wird. Die Referenzfrequenz f/n beträgt beispielsweise 50kHZ oder 100kHz.

Die beiden Elektronikeinheiten µC1, µC2 sind galvanisch voneinander getrennt. Im gezeigten Fall wird für die galvanische Trennung eine Übertragungseinheit DC/DC eingesetzt, bei der es sich um einen DC/DC Wandler handelt. Erfindungsgemäss ist die Ubertragungseinheit DC/DC so ausgestaltet ist, dass sie Energie von der ersten Elektronikeinheit µC1 zur zweiten Elektronikeinheit µC1 unidirektional und Daten zwischen den beiden Elektronikeinheiten µC1, µC2 unidirektional oder bidirektional überträgt. Über die erste Steuerung 10, bei der es sich um eine Gegentaktsteuerung handelt, wird die Ubertragungseinheit DC/DC mit der Taktfrequenz f/n angesteuert. Die zweite Steuerung 11 koppelt die Taktfrequenz f/n auf der Sekundärseite II aus. Der Frequency Locked Loop FLL erzeugt aus der ausgekoppelten Taktfrequenz f/n, dem Wandlertakt, einen festen Multiplikator m, mit dem die zweite Taktfrequenz m·f /n, mit n, m=1, 2, ... für die zweite Elektronikeinheit µC2 erzeugt wird. Die Taktfrequenz m·f /n der zweiten Elektronikeinheit µC2 ist synchron zur Taktfrequenz f und zur Referenz-Taktfrequenz f/n der ersten Elektronikeinheit µC1. Bevorzugt wird über den Frequency Locked Loop FLL eine höhere synchrone Taktfrequenz m·f /n für die sekundärseitige Elektronikeinheit µC2 erzeugt. Beispielsweise wird die Taktfrequenz m·f /n für den zweiten Microcontroller auf 5 MHz Wie bereits zuvor beschrieben, wird durch die erfindungsgemäße Lösung der interne oder externe Taktgeber auf der Sekundärseite II, der üblicherweise von hoher Güte sein muss, eingespart. Diese Ausgestaltung spart nicht nur Herstellungskosten ein, sondern sie spart auch Platz ein. Darüber hinaus kann aufgrund der erfindungsgemäßen Synchronisierung auf der Primärseite I ein kostengünstiger Taktgeber CLK eingesetzt werden, da die Temperaturbelastung der Elektronikeinheit µC1 auf der Primärseite I üblicherweise viel geringer ist als auf der Sekundärseite, also auf der Prozessseite. Weiterhin hat die erfindungsgemäße Lösung den Vorteil, dass die Synchronisierung der Taktfrequenzen der ersten und zweiten Elektronikeinheit µC1, µC2 gleichzeitig mit der Übertragung von Daten und Energie Power erfolgt. Insbesondere wird die Datenübertragung durch die Synchronisierung nicht unterbrochen.

## Patentansprüche

1. Vorrichtung zur Synchronisierung der Taktfrequenzen einer ersten auf der Primärseite (I) angeordneten Elektronikeinheit (µC1), und einer zweiten auf der Sekundärseite (II) angeordneten Elektronikeinheit (µC2),
wobei der ersten Elektronikeinheit (µC1) ein Taktgeber (CLK) zugeordnet ist, der einen Takt mit einer Referenz-Taktfrequenz f erzeugt,
wobei zwischen der ersten Elektronikeinheit (µC1) und der zweiten Elektronikeinheit (µC2) eine Übertragungseinheit (DC/DC) vorgesehen ist, wobei eine erste Steuerung (10) vorgesehen ist, die die Übertragungseinheit (DC/DC) mit einer Taktfrequenz f/n ansteuert,
wobei die Taktfrequenz f/n einen Bruchteil n der Referenz-Taktfrequenz f der ersten Elektronikeinheit (µC1) beträgt,
wobei eine zweite Steuerung (11) vorgesehen ist, die die Taktfrequenz f/n auf der Sekundärseite auskoppelt und anhand der ausgekoppelten Taktfrequenz f/n eine Taktfrequenz für die zweite Elektronikeinheit (µC2) erzeugt, die synchron zur Referenz-Taktfrequenz f der ersten Elektronikeinheit (µC1) ist, wobei der zweiten Elektronikeinheit (µC2) eine Synchronisiereinheit zugeordnet ist, die anhand der ausgekoppelten, synchronisierten Taktfrequenz f/n eine zweite Taktfrequenz m f/n für die zweite Elektronikeinheit (µC2) erzeugt, die ein Vielfaches der Referenz-Taktfrequenz f der ersten Elektronikeinheit (µC1) beträgt, und
wobei die Übertragungseinheit (DC/DC) so ausgestaltet ist, dass sie Energie von der ersten Elektronikeinheit (µC1) zur zweiten Elektronikeinheit (µC1) unidirektional und Daten zwischen den beiden Elektronikeinheiten (µC1, µC2) unidirektional oder bidirektional überträgt,
wobei es sich bei der Übertragungseinheit (DC/DC) um eine galvanische Trennung handelt.

2. Vorrichtung nach Anspruch 1,
**dadurch gekennzeichnet, dass**
es sich bei der Datenübertragung zwischen der ersten Elektronikeinheit (µC1) und der zweiten Elektronikeinheit (µC2) um eine asynchrone Kommunikation handelt.

3. Vorrichtung nach Anspruch 1 oder 2,
**dadurch gekennzeichnet, dass**
es sich bei der Übertragungseinheit (DC/DC) um einen DC/DC-Wandler handelt.

4. Vorrichtung nach einem oder mehreren der vorhergehenden Ansprüche,
**dadurch gekennzeichnet, dass**
es sich bei der ersten Elektronikeinheit (µC1) um einen Mikroprozessor oder einen Microcontroller handelt, der einem Messumformer (MU) zugeordnet ist, und wobei es sich bei der zweiten Elektronikeinheit (µC2) um einen Mikroprozessor oder einen Microcontroller handelt, der einem von dem Messumformer (MU) entfernt angeordneten Sensor (S) oder Aktor (A) zugeordnet ist.

5. Vorrichtung nach einem oder mehreren der vorhergehenden Ansprüche,
**dadurch gekennzeichnet, dass**
es sich bei dem Sensor um einen Sensor handelt, über den der Füllstand eines Mediums in einem Behälter, oder die Dichte des Mediums oder die Viskosität des Mediums, oder die Temperatur des Mediums ermittelt wird.

6. Vorrichtung nach Anspruch 5,
**dadurch gekennzeichnet, dass**
es sich bei dem Sensor um einen vibronischen Sensor handelt.

## Claims

1. An apparatus for synchronizing the clock frequencies of a first electronic unit (µC1) arranged on the primary side (I), and a second electronic unit (µC2) arranged on the secondary side (II), wherein a clock generator (CLK) is assigned to the first electronic unit (µC1), said clock generator (CLK) generating a clock cycle with a reference clock frequency f,
wherein a transmission unit (DC/DC) is provided between the first electronic unit (µC1) and the second electronic unit (µC2), wherein a first controller (10) is provided which actuates the transmission unit (DC/DC) with a clock frequency f/n ,
wherein the clock frequency f/n is a fraction of the reference clock frequency f of the first electronic unit (µC1),
wherein a second controller (11) is provided which decouples the clock frequency f/n on the secondary side and uses the decoupled clock frequency f/n to generate a clock frequency for the second electronic unit (µC2) which is synchronous with the reference clock frequency f of the first electronic unit (µC1), wherein a synchronization unit is assigned to the second electronic unit (µC2), said synchronization unit using the decoupled, synchronized clock frequency f/n to generate a second clock frequency m·f/n for the second electronic unit (µC2), said second clock frequency m·f/n being a multiple of the reference clock frequency f of the first electronic unit (µC1), and
wherein the transmission unit (DC/DC) is designed to transmit energy from the first electronic unit (µC1) to the second electronic unit (µC1) in one direction, and data between the two electronic units (µC1, µC2) in one or two directions,
wherein the transmission unit (DC/DC) provides galvanic isolation.

2. The apparatus as claimed in claim 1,
**characterized in that**
the data transmission between the first electronic unit (µC1) and the second electronic unit (µC2) uses asynchronous communication.

3. The apparatus as claimed in claim 1 or 2,
**characterized in that**
the transmission unit (DC/DC) is a DC/DC converter.

4. The apparatus as claimed in one or more of the preceding claims,
**characterized in that**
the first electronic unit (µC1) is a microprocessor or a microcontroller which is assigned to a transmitter (MU), and wherein the second electronic unit (µC2) is a microprocessor or a microcontroller which is assigned to a sensor (S) or actuator (A) which is arranged at a distance from the transmitter (MU).

5. The apparatus as claimed in one or more of the preceding claims,
**characterized in that**
the sensor is a sensor which is used to determine the fill level of a medium in a container, or the density of the medium, or the viscosity of the medium, or the temperature of the medium.

6. The apparatus as claimed in claim 5,
**characterized in that**
the sensor is a vibronic sensor.

## Revendications

1. Dispositif destiné à la synchronisation des fréquences d'horloge d'une première unité électronique (µC1) disposée sur le côté primaire (I), et d'une deuxième unité électronique (µC2) disposée sur le côté secondaire (II),
un générateur d'horloge (CLK) étant associé à la première unité électronique (µC1), lequel générateur génère une horloge avec une fréquence d'horloge de référence f,
une unité de transmission (DC/DC) étant prévue entre la première unité électronique (µC1) et la deuxième unité électronique (µC2),
une première commande (10) étant prévue, laquelle commande l'unité de transmission (DC/DC) avec une fréquence d'horloge f/n,
la fréquence d'horloge f/n étant une fraction n de la fréquence d'horloge de référence f de la première unité électronique (µC1),
une deuxième commande (11) étant prévue, laquelle découple la fréquence d'horloge f/n sur le côté secondaire et génère, à l'aide de la fréquence d'horloge f/n découplée, une fréquence d'horloge pour la deuxième unité électronique (µC2), laquelle fréquence est synchrone avec la fréquence d'horloge de référence f de la première unité électronique (µC1),
une unité de synchronisation étant associée à la deuxième unité électronique (µC2), laquelle unité de synchronisation génère, à l'aide de la fréquence d'horloge synchronisée f/n découplée, une deuxième fréquence d'horloge m·f/n pour la deuxième unité électronique (µC2), laquelle fréquence est un multiple de la fréquence d'horloge de référence f de la première unité électronique (µC1), et l'unité de transmission (DC/DC) étant conçue pour transmettre de l'énergie de la première unité électronique (µC1) à la deuxième unité électronique (µC2) de manière unidirectionnelle et des données entre les deux unités électroniques (µC1, µC2) de manière unidirectionnelle ou bidirectionnelle,
l'unité de transmission (DC/DC) étant une séparation galvanique.

2. Dispositif selon la revendication 1,
**caractérisé en ce que**
concernant la transmission de données entre la première unité électronique (µC1) et la deuxième unité électronique (µC2), il s'agit d'une communication asynchrone.

3. Dispositif selon la revendication 1 ou 2,
**caractérisé en ce que**
concernant l'unité de transmission (DC/DC), il s'agit d'un convertisseur DC/DC.

4. Dispositif selon l'une ou plusieurs des revendications précédentes,
**caractérisé en ce que**
concernant la première unité électronique (µC1), il s'agit d'un microprocesseur ou d'un microcontrôleur associé à un transmetteur (MU), et **en ce que** concernant la deuxième unité électronique (µC2), il s'agit d'un microprocesseur ou d'un microcontrôleur associé à un capteur (S) ou à un actionneur (A) disposé à distance du transmetteur (MU).

5. Dispositif selon l'une ou plusieurs des revendications précédentes,
**caractérisé en ce que**
concernant le capteur, il s'agit d'un capteur permettant de déterminer le niveau d'un produit dans un réservoir, ou la densité du produit ou la viscosité du produit, ou la température du produit.

6. Dispositif selon la revendication 5,
**caractérisé en ce que**
concernant le capteur, il s'agit d'un capteur vibronique.
